# FASCICULE DE BREVET EUROPEEN

(11) **EP 0 537 073 B1**
(45) Date de publication et mention de la délivrance du brevet: **28.02.1996**
(21) Numéro de dépôt: 92402749.3
(22) Date de dépôt: 08.10.1992
(51) Int. Cl.: H01R 4/68, H01B 12/10

(54) **Amenée de courant pour une utilisation en régime et pour une installation cryogénique**
Stromzuleiter zur kryogenischen Verwendung und für eine kryogenische Vorrichtung
Current lead for cryogenic use and for a cryogenic device

(30) Priorité: 10.10.1991 FR 9112471
(43) Date de publication de la demande: 14.04.1993
(73) Titulaire: GEC ALSTHOM SA, F-75116 Paris (FR)
(72) Inventeur: Estop, Pascal, F-94400 Vitry sur Seine (FR); Verhaege, Thierry, F-91160 Saulx les Chartreux (FR); Tavergnier, Jean-Pierre, F-91310 Montlhery (FR)
(74) Mandataire: Dalsace, Michel

(56) Documents cités:
- EP-A- 0 354 636
- DE-A- 2 950 022
- GB-A- 2 183 110

## Description

La présente invention concerne une amenée de courant pour une utilisation en régime variable, en particulier pour un régime alternatif, et pour relier une installation placée dans un milieu non cryogénique (par exemple à température ambiante) à une installation placée dans un milieu cryogénique (par exemple à 4,2 K).

Les amenées de courant utilisées actuellement pour les installations cryogéniques se présentent par exemple sous la forme de conducteurs en cuivre d'environ 2 mm de diamètre, mis en parallèle et en nombre suffisant pour assurer le passage du courant de la source vers le conducteur surpraconducteur ou bien de tubes de cuivre d'épaisseur maximale 2 mm dont le diamètre extérieur est proportionnel au courant à transporter. Trois types de pertes apparaissent dans de telles amenées : les pertes dues à la conduction thermique, les pertes de conduction électrique aggravées par l'effet de peau et les pertes par courant de Foucault dans les régions soumises à un champ variable généré par l'appareillage supraconducteur. Dans certaines conditions dues au dimensionnement des parties en cuivre et aux composantes résiduelles de champ, le niveau des pertes devient inacceptable tant pour la jonction cuivre-supraconducteur (risque de transition) que pour la consommation d'hélium liquide qui devient excessive.

En outre, l'utilisation de cuivre massif, utilisation classique pour les amenées de courant en régime continu, provoque, en régime variable, une augmentation importante de la résistance due à l'effet de peau.

L'emploi d'une tresse implique l'utilisation de filaments de cuivre généralement très cassants à des dimensions (inférieures à 0,1 mm) garantissant des pertes par courants de Foucault à un niveau acceptable quant à la consommation d'hélium liquide. En outre, la faible rigidité mécanique de ce type d'amenée de courant et les vibrations probables de la tresse en milieu cryogénique sont des inconvénients majeurs pour ce type de technologie. La tresse implique aussi le même comportement que le cuivre massif au niveau des liaisons noyées dans la soudure permettant la connexion électrique avec le conducteur supraconducteur. En effet, si on voulait par exemple faire passer un courant de 1 kA en régime variable, il faudrait une tresse composée d'environ 10 000 filaments, la finesse des filaments réduisant les pertes par courants de Foucault. Cependant, à la connexion, il est impossible pratiquement de souder séparément tous ces filaments et une soudure globale donne à la tresse le comportement du cuivre massif.

L'un des buts de l'invention est de concevoir une amenée de courant ayant des pertes par courants de Foucault les plus faibles possibles. Pour cela, on cherche à réduire les dimensions des parties métalliques peu résistives plongées dans les zones de champ magnétique.

Selon l'invention, il est maintenant proposé une amenée de courant pour une utilisation en régime variable et destinée à relier une installation placée dans un milieu non cryogénique à une installation placée dans un milieu cryogénique, l'amenée de courant étant caractérisée en ce qu'elle est constituée de plusieurs brins formant un assemblage transposé, chaque brin étant formé, de manière connue en soi (voir EP-A-354 636), de filaments d'un métal de haute pureté noyés dans une matrice d'un alliage métallique résistif.

De préférence le brin est torsadé. L'avantage de ceci est de réduire les pertes par courants de Foucault.

Ce mode de réalisation selon un mode d'assemblage similaire à celui du conducteur surpraconducteur permet en particulier de décomposer la liaison de l'amenée de courant avec le supraconducteur en plusieurs liaisons (par exemple brin à brin) de dimensions réduites afin de réduire les pertes par courants de Foucault.

De préférence, le métal des filaments a une résistivité à température cryogénique inférieure à 10⁻⁹ Ω.m, l'alliage métallique de la matrice ayant une résistivité à température cryogénique supérieure à 10⁻⁸ Ω.m.

L'invention sera mieux comprise et d'autres avantages et particularités apparaîtront à la lecture de la description qui va suivre, donnée à titre non limitatif, accompagné des dessins annexés parmi lesquels :
- la figure 1 représente l'extrémité d'un brin d'une amenée de courant selon l'invention,
- la figure 2 représente une amenée de courant en forme de toron de torons selon l'invention,
- la figure 3 représente une amenée de courant en forme de tresse selon l'invention,
- la figure 4 représente une amenée de courant en forme de barre Roebel selon l'invention.

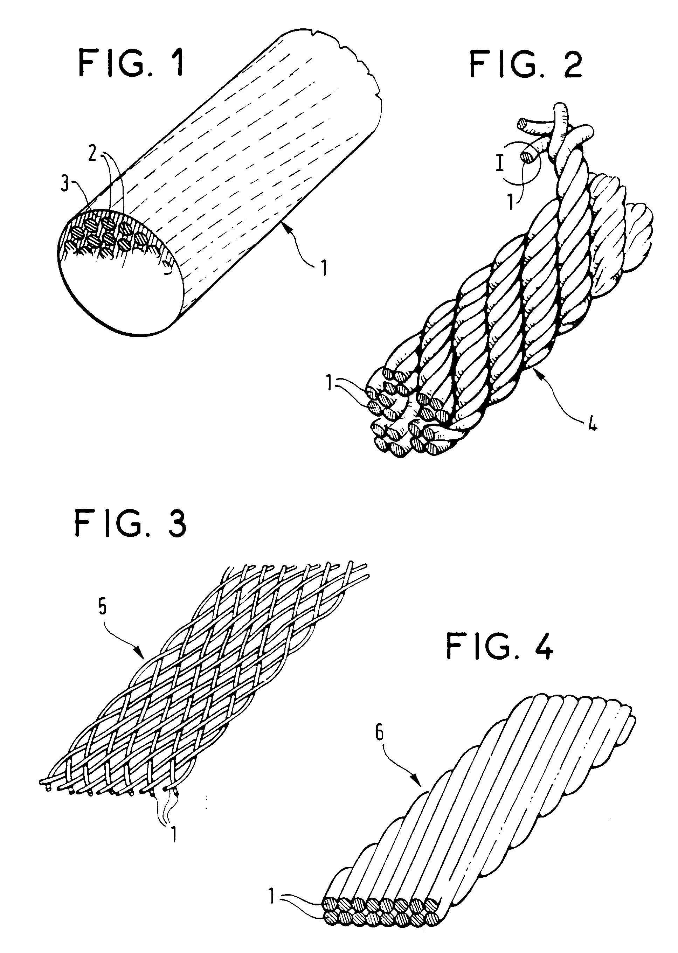

Sur la figure 1, on a représenté l'extrémité d'un brin 1 constitué de filaments 2 noyés dans une matrice 3. Le brin 1 est avantageusement torsadé et possède un diamètre inférieur à 2 mm ou de l'ordre de 2 mm. Les filaments sont en un métal de haute pureté, par exemple en cuivre, et d'un diamètre inférieur à 0,1 mm ou de l'ordre de 0,1 mm. Par métal de haute pureté on entend un métal suffisamment pur pour présenter une très basse résistivité à la température du milieu cryogénique. A la place du cuivre, on pourrait utiliser de l'aluminium. La matrice est avantageusement en cupro-nickel, de préférence à 30 % de nickel, en proportion massique.

On peut ainsi obtenir un brin dont le métal des filaments a une résistivité à température cryogénique de l'ordre de 10⁻¹⁰ Ω.m et dont l'alliage métallique de la matrice a une résistivité à température cryogénique d'environ 4 X 10⁻⁷ Ω.m.

Le brin est choisi de faible diamètre pour réduire l'effet de peau. Par exemple, pour un brin de 2 mm de diamètre, de résistivité en continu égale à 10⁻¹⁰ Ω.m, dans lequel circule un courant sinusoïdal de fréquence 50 Hz, l'effet de peau augmente la résistivité apparente de 8 % par rapport à sa valeur en continu. A titre de comparaison, un barreau de 20 mm de diamètre de même résistivité en continu aurait une résistivité apparente à 50 Hz 7 fois plus grande.

Plus la fréquence d'utilisation est élevée plus on a intérêt à diminuer le diamètre du brin pour limiter l'effet de peau.

L'ordre de grandeur de résistivité que présente la matrice en cupro-nickel est à la fois suffisamment élevé pour réduire à un niveau suffisamment faible les courants de Foucault entre les filaments, et suffisamment bas pour permettre le transfert entre l'amenée de courant et le conducteur supraconducteur avec des pertes de transfert tout à fait acceptables, ce que ne permet pas une matrice isolante.

Le nombre de brins à assembler est fonction du courant à transporter. Les brins constitueront avantageusement un assemblage transposé dans lequel chaque brin peut se déduire de son voisin par une simple translation le long de l'axe du conducteur.

Les brins peuvent être assemblés en torons autour d'un brin central. Dans ce cas, le brin central est de préférence fortement résistif (par exemple en cupro-nickel) car il n'est pas transposé. On diminue ainsi les pertes par conduction thermique, la conductibilité thermique du cupro-nickel étant très inférieure à celle du cuivre.

La figure 2 montre un assemblage du type toron de torons, dans lequel les torons de base, référencés 4 et formés à partir de brins 1, sont assemblés pour constituer l'amenée de courant.

Les brins 1 peuvent aussi être assemblés en tresse telle que la tresse 5 représentée à la figure 3. La même structure en tresse peut être réalisée à partir de torons.

Un autre assemblage transposé est illustré par la figure 4. Il s'agit d'une barre Roebel formée de deux couches de brins ou torons disposés obliquement par rapport à l'axe de la barre. Lorsqu'un brin ou un toron d'une couche a atteint l'un des côtés de la barre, il revient vers l'autre côté en passant dans l'autre couche et ainsi de suite.

La connexion de l'amenée de courant selon l'invention avec un conducteur supraconducteur peut se faire en plaçant leurs extrémités côte à côte sur une longueur d'environ 10 cm et en les soudant.

La fabrication des brins de l'amenée de courant peut se faire selon les mêmes techniques d'élaboration que pour les brins multifilamentaires supraconducteurs, à savoir filage à chaud et étirages successifs d'une billette constituée d'éléments en cuivre gainés de cupro-nickel. Un tel brin peut alors être assemblé en toron, toron de torons, etc., et répondre avec flexibilité aux critères géométriques de connexion au conducteur supraconducteur.

A titre d'exemple, pour réaliser des amenées de courant capables de transporter un courant de 2000 A, l'élément de départ peut être un lopin de cuivre de 180 mm de diamètre dans une gaine de cupro-nickel de 207 mm de diamètre. Ce produit est transformé par filage et étirage en une barre hexagonale de 8,5 mm entre faces opposées qui est tronçonnée en 421 tiges, lesquelles sont assemblées dans un corps de cupro-nickel de diamètre 190/207 mm. L'ensemble est étiré jusqu'à obtenir un brin de section circulaire et de diamètre 2 mm, que l'on torsade. Un tel brin comporte 421 filaments de 72 µm de diamètre espacés de 11 µm par du cupro-nickel. Un brin comporte donc un volume de 58 % occupé par les filaments. Sa résistivité transverse est de 7.10⁻⁸ Ω.m alors que sa résistivité longitudinale est de 1,7.10⁻¹⁰ Ω.m, pour un cuivre bien traité thermiquement et d'une résistivité de 10⁻¹⁰ Ω.m.

Le tout est assemblé en toron composé de six brins selon l'invention autour d'un brin central en cupro-nickel. On forme ensuite un gros toron à partir de 6 de ces torons et d'une tige centrale en cupro-nickel, ce qui fait un ensemble de 42 brins au total dont 36 utilisés pour le passage du courant.

Pour un tel ensemble, la puissance de pertes par courants de Foucault, pour un champ résiduel sinusoïdal de 50 milliteslas crête à 50 Hz et pour une longueur de jonction de 10 cm, est de 5. 10⁻³ W contre 2,4 W (360 kW/m³) pour un conducteur de même résistance constitué de 36 brins de cuivre pur. Un tel niveau de pertes (2,4 W) est considérable et peut être responsable de transitions prématurés au niveau de la connexion.

L'amenée de courant selon l'invention présente une forte résistivité transversale et une forte conductivité longitudinale. L'effet de peau est très réduit. L'invention apporte un gain cryogénique important et élimine un point chaud susceptible d'amorcer une transition du conducteur supraconducteur.

La jonction entre l'amenée de courant et le conducteur supraconducteur peut être une soudure de type plomb-étain ou le résultat d'un magnéto-formage.

## Revendications

1. Amenée de courant pour une utilisation en régime variable et destinée à relier une installation placée dans un milieu non cryogénique à une installation placée dans un milieu cryogénique, l'amenée de courant étant caractérisée en ce qu'elle est constituée de plusieurs brins formant un assemblage transposé, chaque brin (1) étant formé, de manière connue en soi, de filaments (2) d'un métal de haute pureté noyés dans une matrice (3) d'un alliage métallique résistif.

2. Amenée de courant selon la revendication 1, caractérisée en ce que les brins (1) sont torsadés.

3. Amenée de courant selon l'une des revendications 1 ou 2, caractérisée en ce que l'assemblage transposé est un toron (4).

4. Amenée de courant selon la revendication 3, caractérisée en ce que l'amenée de courant est formée par au moins un toron de torons.

5. Amenée de courant selon l'une des revendications 1 ou 2, caractérisée en ce que l'assemblage transposé est une tresse (5).

6. Amenée de courant selon l'une des revendications 1 ou 2, caractérisée en ce que l'assemblage est une barre Roebel (6).

7. Amenée de courant selon l'une des revendications 1 à 6, caractérisée en ce que le métal des filaments a une résistivité à température cryogénique inférieure à 10⁻⁹ Ω.m, l'alliage métallique de la matrice ayant une résistivité à température cryogénique supérieure à 10⁻⁸ Ω.m.

8. Amenée de courant selon la revendication 7, caractérisée en ce que le métal des filaments est du cuivre ou de l'aluminium, l'alliage métallique étant du cupro-nickel.

9. Amenée de courant selon l'une quelconque des revendications précédentes, caractérisée en ce que le diamètre des filaments est inférieur ou égal à 0,1 mm et en ce que le diamètre d'un brin est inférieur ou égal à 2 mm.

## Patentansprüche

1. Stromzuführung, um für Wechselstrombetrieb eine in einem außerhalb des Kryobereichs liegende Anlage mit einer Anlage zu verbinden, die sich im Kryobereich befindet, dadurch gekennzeichnet, daß sie aus mehreren Adern besteht, die einen transponierten Aufbau besitzen, und daß jede Ader (1) in an sich bekannter Weise aus Fäden (2) eines hochreinen Metalls besteht, die in eine Matrix (3) aus einer Metallegierung mit erhöhtem Widerstand eingebettet sind.

2. Stromzuführung nach Anspruch 1, dadurch gekennzeichnet, daß die Adern (1) verdrillt sind.

3. Stromzuführung nach einem der Ansprüche 1 oder 2, dadurch gekennzeichnet, daß der transponierte Aufbau eine Litze (4) ist.

4. Stromzuführung nach Anspruch 3, dadurch gekennzeichnet, daß sie aus mindestens einer Litze von verdrillten Litzen besteht.

5. Stromzuführung nach einem der Ansprüche 1 oder 2, dadurch gekennzeichnet, daß der transponierte Aufbau ein Geflecht (5) ist.

6. Stromzuführung nach einem der Ansprüche 1 oder 2, dadurch gekennzeichnet, daß der transponierte Aufbau ein Roebelstab (6) ist.

7. Stromzuführung nach einem der Ansprüche 1 bis 6, dadurch gekennzeichnet, daß das Metall der Fäden bei Kryotemperatur einen spezifischen Widerstand unter 10⁻⁹ Ωm besitzt, während die metallische Legierung der Matrix bei Kryotemperatur einen spezifischen Widerstand größer als 10⁻⁸ Ωm aufweist.

8. Stromzuführung nach Anspruch 7, dadurch gekennzeichnet, daß das Metall der Fäden Kupfer oder Aluminium ist, während die Metallegierung eine Kupfer-Nickel-Legierung ist.

9. Stromzuführung nach einem beliebigen der vorhergehenden Ansprüche, dadurch gekennzeichnet, daß der Durchmesser der Fäden höchstens 0,1 mm und der Durchmesser einer Ader höchstens 2 mm beträgt.

## Claims

1. A current lead for use under varying conditions and designed to connect an installation placed in a non-cryogenic medium to an installation placed in a cryogenic medium, the current lead being characterized in that it is constituted by a plurality of strands making up a transposed assembly, each strand (1) being made up, in a manner known per se, of filaments (2) of high purity metal embedded in a matrix (3) of resistive metal alloy.

2. A current lead according to claim 1, characterized in that the strands (1) are twisted.

3. A current lead according to claim 1 or 2, characterized in that the transposed assembly is made up of a set of strands twisted together (4).

4. A current lead according to claim 3, characterized in that the current lead is made up of a plurality of twisted-together sets of strands that are in turn twisted together.

5. A current lead according to claim 1 or 2, characterized in that the transposed assembly is a braid (5).

6. A current lead according to claim 1 or 2, characterized in that the transposed assembly is a transposed conductor bar (6).

7. A current lead according to any one of claims 1 to 6, characterized in that the metal of the filaments has resistivity at cryogenic temperature of less than 10⁻⁹Ω.m, with the metal alloy of the matrix having resistivity at cryogenic temperature of more than 10⁻⁸Ω.m.

8. A current lead according to claim 7, characterized in that the metal of the filaments is copper or aluminum, and the metal alloy is cupronickel.

9. A current lead according to any preceding claim, characterized in that the diameter of the filaments is less than or equal to 0.1 mm and in that the diameter of a strand is less than or equal to 2 mm.
